# EUROPÄISCHE PATENTANMELDUNG

(11) **EP 1 717 206 A1**
(43) Veröffentlichungstag der Anmeldung: **02.11.2006**
(21) Anmeldenummer: 06005451.7
(22) Anmeldetag: 17.03.2006
(51) Int. Cl.: C02F 1/72, C02F 1/50, C02F 103/02

(54) **Verfahren zur Entkeimung und zur Eliminierung von Biofilmen**

(30) Priorität: 18.04.2005 DE 102005018018
(71) Anmelder: MOL Katalysatortechnik GmbH, 06217 Merseburg (DE); KNG Kraftwerks- und Netzgesellschaft mbH, 10115 Berlin (DE)
(72) Erfinder: Koppe, Jügen, Dr., 06258 Schkopau (DE); Lausch, Hartmut, Dr., 06184 Kabelsketal (DE); Hockarth, Wolf-Ingo, 18182 Willershagen (DE); Röhrdanz, Bärbel, 18106 Rostock (DE); Schönfelder, Toralf, 18157 Rostock (DE)
(74) Vertreter: Döpp, Ludger

(57) **Zusammenfassung**

Verfahren zur Entkeimung und zur Eliminierung von Biofilmen und/oder Bioschleimen in Kühlkreisläufen mit Rückkühlwerken, indem in den Kühlkreislauf folgende Vollmetallkatalysatoren eingebracht werden, an denen als Betriebsmittel impulsweise zuzudosierende wässrige Peroxoverbindungen aktiviert werden und die Zudosierung erst dann erfolgt, wenn im zu behandelnden System die Anzahl der im Wasser frei beweglichen Keime eine vorgebbare Mindestkonzentration erreicht bzw. überschritten hat.

## Beschreibung

Die Erfindung betrifft ein Verfahren zur Entkeimung und zur Eliminierung von Biofilmen und/oder Bioschleimen in Kühlkreisläufen mit Rückkühlwerken.

Die Verwendung von Chlor bzw. Natriumhypochlorit zur Entkeimung von Kühlwasserkreisläufen gehört gegenwärtig noch zur betrieblichen Praxis. Wesentliche Gründe hierfür sind einerseits die praktischen Erfahrungen im Umgang mit diesen Chemikalien, die mittlerweile ein ganzes Jahrhundert zurückreichen. Andererseits handelt es sich hierbei um Grundchemikalien aus der chemischen Produktion, die aufgrund der Rohstoffsituation und des Herstellungsmaßstabes sehr preiswert auf dem Markt angeboten werden können.

Typische Einrichtungen mit großem Kühlbedarf sind im Bereich der Energieerzeuger und in der Chemieindustrie angesiedelt, erstrecken sich aber über weite technische Bereiche bis hin zur Klimatechnik.

Die durch den Chlorideintrag verursachte hohe Korrosivität des Wassers ist einer der Beweggründe, nach alternativen Entkeimungsmitteln und -technologien zu suchen. Ein weiterer Beweggrund, der, im Zuge der sich ständig verschärfenden Umweltgesetzgebung, an Bedeutung gewinnt, ist die Einhaltung umweltrelevanter Grenzwerte, d.h. insbesondere des AOX-Wertes.

Moderne Kühlkreisläufe sind so ausgelegt, dass dieser Parameter auch eingehalten werden kann. Allerdings ist hierfür die sorgfältige Einhaltung des exakten Fahrregiems notwendig.

Viele ältere Anlagen können hingegen nur noch mit Ausnahmegenehmigungen betrieben werden.

Ziel des Erfindungsgegenstandes ist es, unter Berücksichtigung der sich ständig verschärfenden Umweltgesetzgebung, ein wirtschaftlich attraktives alternatives, d.h. halogenfrei arbeitendes, Verfahren zur Entkeimung und zur Eliminierung von Biofilmen und/oder Bioschleimen in Kühlkreisläufen mit Rückkühlwerken bereitzustellen, das auf der Bildung von Biotensiden aus den im Wasser frei beweglichen Keimen beruht.

Dieses Ziel wird erreicht durch ein Verfahren zur Entkeimung und zur Eliminierung von Biofilmen und/oder Bioschleimen in Kühlkreisläufen mit Rückkühlwerken, indem in den Kühlkreislauf Vollmetallkatalysatoren eingebracht werden, an denen als Betriebsmittel impulsweise zuzudosierende wässrige Peroxoverbindungen aktiviert werden und die Zudosierung erst dann erfolgt, wenn im zu behandelnden System die Anzahl der im Wasser frei beweglichen Keime eine vorgebbare Mindestkonzentration erreicht bzw. überschritten hat.

Die Dosiermengen und -intervalle müssen so bemessen sein, dass sich bis zur nächsten Dosierung eine für die notwendige Biotensidbildung ausreichende Mikroorganismenpopulation entwickeln kann.

Einem weiteren Gedanken der Erfindung gemäß wird vorgeschlagen, dass das Betriebsmittel impulsweise zudosiert wird, wobei hier bevorzugt eine so genannte Stoßdosierung vorgenommen wird, d.h. 0,1 bis 20 ppm Peroxid binnen maximal 30 min zudosiert werden, vorzugsweise binnen < 5 min.

Während des Betriebes werden vorhandene biologische Beläge in Gegenwart einer ausreichenden Keimpopulation durch stoßweise Zugabe von Betriebsmitteln reduziert bzw. beseitigt.

Vorteilhafterweise wird die Zudosierung des Betriebsmittels dann durchgeführt, wenn die Mindestkonzentration der im Kühlwasser frei beweglichen Keime 500 bis 10000 KBE/ml beträgt (KBE/ml: Kolonie bildende Einheiten pro ml).

Als Betriebsmittel kommt vorteilhafterweise Wasserstoffperoxid in Form einer 1- bis 80-prozentigen Lösung zum Einsatz, insbesondere einer 20 bis 60-prozentigen Lösung.

Im folgenden wird das erfindungsgemäße Verfahren anhand von Beispielen veranschaulicht.

### Beispiel 1

In einem mit Vollmetallkatalysator ausgerüsteten Kühlkreislauf werden 3 ppm Wasserstoffperoxid zum einen binnen 2 min und zum anderen binnen einer Stunde zudosiert und die dabei aufgetretene Wasserstoffperoxid-Spitzenkonzentration sowie die Gesamtkeimzahl nach 24 h bestimmt. Die Ausgangskeimzahl betrueg 8463 KBE/ml.

| Dosierzeit | Wassserstoffperoxid-Spitzenkonzentration in ppm | Gesamtkeimzahl in KBE/ml |
|---|---|---|
| 60 min | 0,79 ppm | 5748 |
| 2 min | 4,7 ppm | 1867 |

Durch die rasche Zugabe von Wasserstoffperoxid wird örtlich eine höhere als die durchschnitte Konzentration eingestellt, wodurch die Entkeimungswirkung deutlich effizienter verläuft.

### Beispiel 2

In einem konventionell (NaOCl) entkeimten Kühlkreislauf wurde innerhalb von 2 Wochen auf Probeformkörpern ein Biofilm angezüchtet. Nach Einbau des Katalysators in den Kühlkreislauf wurde, im Abstand von 24 h, binnen 2 min 3 ppm Wasserstoffperoxid zudosiert. In der folgenden Tabelle sind die ermittelten Keimzahlen im Kreislaufwasser der Belegungsdichte auf den Probeformkörpern gegenüber gestellt.

| Dos-Nr. | Gesamtkeimzahl im Kreislaufwasser in KBE/ml | Belegungsdichte auf den Probeformkörpern in KBE/cm² |
|---|---|---|
| 0 | 2 x 10⁵ | 3 x 10⁵ |
| 1 | 3 x 10³ | 972 |
| 2 | 541 | 1308 |
| 3 | 174 | 5 x 10³ |
| 5 | 98 | 7 x 0⁴ |

Während die Keimzahl im Wasser kontinuierlich absinkt, nimmt die Belegungsdichte zunächst ebenfalls drastisch ab, stagniert dann, um anschließend wieder anzuwachsen, weil aufgrund der stark abgesunkenen Zahl frei im Wasser beweglicher Keime nicht mehr ausreichend Biotenside bereitgestellt werden können, um die vorhandenen Beläge abzulösen bzw. ein weiteres Wachstum zu verhindern.

## Patentansprüche

1. Verfahren zur Entkeimung und zur Eliminierung von Biofilmen und/oder Bioschleimen in Kühlkreisläufen mit Rückkühlwerken, indem in den Kühlkreislauf folgende Vollmetallkatalysatoren eingebracht werden, an denen als Betriebsmittel impulsweise zuzudosierende wässrige Peroxoverbindungen aktiviert werden und die Zudosierung erst dann erfolgt, wenn im zu behandelnden System die Anzahl der im Wasser frei beweglichen Keime eine vorgebbare Mindestkonzentration erreicht bzw. überschritten hat.

2. Verfahren nach Anspruch 1, **dadurch gekennzeichnet, dass** die Zudosierung des Betriebsmittels dann durchgeführt wird, wenn die Mindestkonzentration der im Kühlwasser frei beweglichen Keime 500 bis 10000 KBE/ml beträgt (KBE/ml: Kolonie bildende Einheiten pro ml).

3. Verfahren nach Anspruch 1 oder 2, **dadurch gekennzeichnet, dass** als Betriebsmittel Wasserstoffperoxid in Form einer 1- bis 80-prozentigen Lösung eingesetzt wird.

4. Verfahren nach einem der Ansprüche 1 bis 3, **dadurch gekennzeichnet, dass** als Betriebsmittel Wasserstoffperoxid in Form einer 20 - 60-prozentigen Lösung eingesetzt wird.

5. Verfahren nach einem der Ansprüche 1 bis 4, **dadurch gekennzeichnet, dass** 0,1 bis 20 ppm Wasserstoffperoxid innerhalb eines Zeitraumes von maximal 30 min., insbesondere < 10 min., stoßweise zudosiert wird.
